# EUROPEAN PATENT APPLICATION

(11) **EP 4 466 983 A1**
(43) Date of publication of application: **27.11.2024**
(21) Application number: 23175638.8
(22) Date of filing: 26.05.2023
(51) Int. Cl.: A01G 9/14

(54) **A GLASS SUPPORTING SYSTEM FOR A GREENHOUSE**

(71) Applicant: Boal Systemen B.V., 2691 HC 's-Gravenzande (NL)
(72) Inventor: Breukel, Petrus Anthonius Maria, 2548 EJ Den Haag (NL); Cornelisse, Stefan Paul, 2901 GL Capelle aan den IJssel (NL)
(74) Representative: De Vries & Metman

(57) **Abstract**

A glass supporting system for a greenhouse comprises a horizontally oriented beam (2) and an insulated glass panel (6) which has an outer side (7), an opposite inner side (8) and a circumferential rim (9) extending between the outer side (7) and the inner side (8). An edge portion of the insulated glass panel (6) is supported by a first support (10) of the beam (2) which contacts the rim (9) and a second support (11) of the beam (2) which contacts the inner side (8). The second support (11) is located at a base (12) of the beam (2) that extends below the first support (10). The insulated glass panel (6) is inclined upwardly in a direction away from the beam (2). The glass supporting system comprises an opening between a lower side of the first support (10) and the base (12) for allowing water to flow in a direction away from the second support (12) and pass the lower side of the first support (10).

## Description

The present invention relates to a glass supporting system for a greenhouse, comprising a horizontally oriented beam and an insulated glass panel which has an outer side, an opposite inner side and a circumferential rim extending between the outer side and the inner side, wherein an edge portion of the insulated glass panel is supported by a first support of the beam which contacts the rim and a second support of the beam which contacts the inner side, wherein the second support is located at a base of the beam that extends below the first support, wherein the insulated glass panel is inclined upwardly in a direction away from the beam.

Such a glass supporting system is known in the prior art, particularly as part of a roof of a greenhouse. Usually an insulated glass panel has at least two panes which are located at a distance from each other and a sealing between the panes at the rim of the insulated glass panel. The first support of the known glass supporting system may form an obstacle which holds water, for example condensate, at the edge portion of the insulated glass panel. Due to capillary action the water can penetrate the sealing at the rim of the insulated glass panel, which may lead to deterioration of the sealing and eventually leakage thereof.

An object of the invention is to provide an improved glass supporting system.

This object is accomplished with the glass supporting system according to the invention which is characterized in that the glass supporting system comprises an opening between a lower side of the first support and the base for allowing water to flow in a direction away from the second support and pass the lower side of the first support. This prevents the edge portion of the insulated glass panel from being immersed in water, hence minimizing the risk of penetration of water into the insulated glass panel.

In a preferred embodiment the entire lower side of the first support is free from the base, since this provides a large opening between the first support and the base for discharging water.

The second support may be located at a distance from the rim such that a portion of the inner side of the insulated glass panel is free from a support.

The beam may comprise a gutter profile. In this case the water that has passed the lower side of the first support can be discharged together with rain water from the outer side of the insulated glass panel, which flows towards the gutter profile.

In a particular embodiment the base comprises a plate-shaped lateral protrusion of the beam.

More specifically, the second support may be located at a free end of the protrusion.

The beam may comprise an extruded profile, preferably made of aluminium.

The first support may comprise a separate support element which is mounted to the remainder of the beam. This facilitates preparing the beam for receiving the insulated glass panel during an assembling operation.

The support element may also comprise an extruded profile, preferably made of aluminium.

Preferably, the length of the support element is smaller than the length of the insulated glass panel as measured in longitudinal direction of the beam, for example smaller than 25%, or even smaller than 10%, of the length of the insulated glass panel as measured in longitudinal direction of the beam. This minimizes the use of material whereas providing a relatively large space for discharging water from the lower edge portion of the insulated glass panel. Besides, it minimizes potential wet contact between the support element and the insulated glass panel. For example, each insulated glass panel may be supported by at least two such support elements which are located at a distance from each other in longitudinal direction of the beam. Since in this case the support element may be shorter than the beam, the support element should be a separate support element when the remainder of the beam is an extruded profile.

The support element may comprise a flexible material at a side which contacts the rim and/or the second support may comprise a flexible material at a side which contacts the inner side in order to avoid damage to the insulated glass panel.

The base may be inclined upwardly in a direction away from the beam so as to optimize water discharge.

The invention will hereafter be elucidated with reference to very schematic drawings showing an embodiment of the invention by way of example.
Fig. 1 is a cross-sectional view of a roof of a greenhouse including an embodiment of a glass supporting system according to the invention.
Fig. 2 is an enlarged view of a part of Fig. 1 as indicated by II in Fig. 1.
Fig. 3 is a similar view as Fig. 2, showing a different part of the glass supporting system on a larger scale.

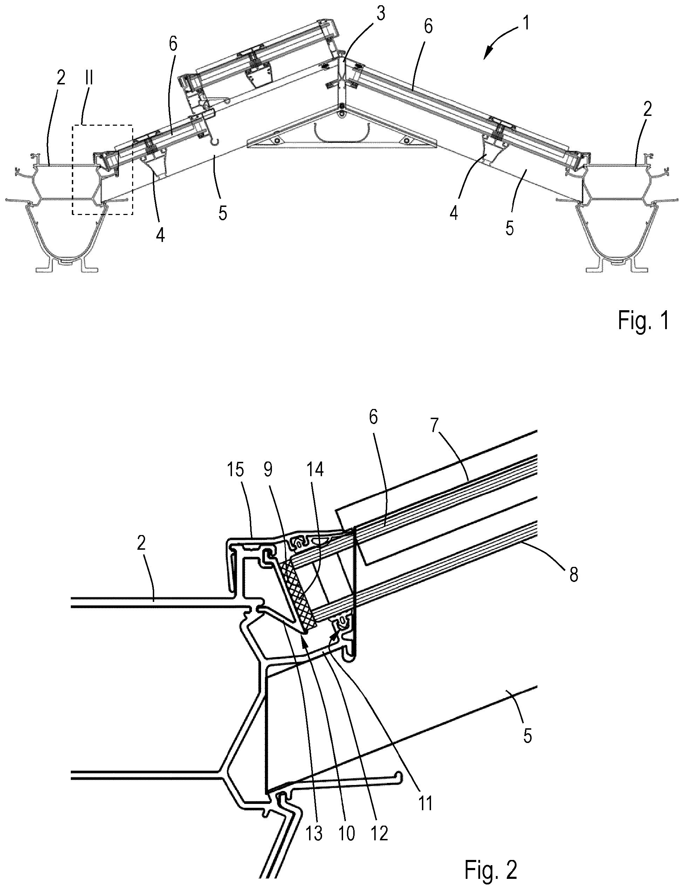

Fig. 1 shows a gable-shaped roof 1 of a greenhouse. The roof 1 comprises two gutter profiles 2, a ridge profile 3 and two intermediate profiles 4. The gutter profiles 2, the ridge profile 3 and the intermediate profiles 4 extend substantially horizontally and parallel to each other in longitudinal direction of the roof 1. At least the gutter profiles 2 may have a slight inclination in their longitudinal directions in order to discharge rain water from the roof 1 effectively. The ridge profile 3 lies at a higher level than the gutter profiles 2 whereas the intermediate profiles 4 lie between the ridge profile 3 and the respective gutter profiles 2 at either side of the ridge profile 3.

Each of the gutter profiles 2 is connected to the ridge profile 3 and the corresponding intermediate profiles 4 through lateral beams 5. The lateral beams 5 extend in transverse direction of the gutter profiles 2, the ridge profile 3 and the intermediate profiles 4. The gutter profiles 2, the ridge profile 3, the intermediate profiles 4 and the lateral beams 5 may comprise extruded profiles, preferably made of aluminium.

The roof 1 is provided with insulated glass panels 6 which are supported by the gutter profiles 2, the ridge profile 3, the intermediate profiles 4 and the lateral beams 5. Fig. 2 shows in detail how an insulated glass panel 6 is supported by one of the gutter profiles 2, thus illustrating a glass supporting system according to the invention. Each insulated glass panel 6 has an outer side 7, an opposite inner side 8 and a circumferential rim 9 which extends between the outer side 7 and the inner side 8. Each of the insulated glass panels 6 may be rectangular. Usually, an insulated glass panel 6 has at least two panes which are located at a distance from each other and a sealing between the panes at the rim 9 of the insulated glass panel 6.

Fig. 2 shows that an edge portion of the insulated glass panel 6 is supported by a first support 10 which contacts the rim 9 of the insulated glass panel 6 and a second support 11 which contacts the inner side 8 of the insulated glass-panel 6. The insulated glass panel 6 is inclined upwardly in a direction away from the gutter profile 2. The second support 11 is located at a base of the gutter profile 2, which base is in the form of a plate-shaped lateral protrusion 12 of the gutter profile 2 in this case. More specifically, the second support 11 is located at a free end of the protrusion 12. In the embodiment as shown in Fig. 2 the protrusion 12 is also used for locking the lateral beams 5 to the gutter profile 2. The second support 11 comprises a flexible material such as a rubber strip at a side which contacts the inner side 8 of the insulated glass panel 6.

In the embodiment as shown in Fig. 2 the second support 11 is located at a distance from the rim 9 such that a portion of the inner side 8 of the insulated glass panel 6 between the first support 10 and the second support 11 is free from any support.

The protrusion 12 extends below the first support 10, whereas a lower side of the first support 10 is entirely free from the protrusion 12. This allows water, such as condensate, to flow in a direction away from the second support 11 and pass the lower side of the first support 10, hence preventing the edge portion of the insulated glass panel 6 from being immersed in water. This minimizes the risk that water penetrates the insulated glass panel 6 at its rim 9. In order to discharge water effectively, the lateral protrusion 12 is slightly inclined upwardly in a direction away from the gutter profile 2.

In the embodiment as shown in Fig. 2 the first support 10 comprises a separate support element 13 which is mounted to the remainder of the gutter profile 2. The support element 13 may also be an extruded profile and made from aluminium. It has a V-shaped cross-section and is mountable to the remainder of the gutter profile 2. The length of the support element 13 is smaller than the length of the insulated glass panel 6 as measured in longitudinal direction of the gutter profile 2. For example, each insulated glass panel 6 may be supported by two such support elements 13 which are located at a distance from each other in longitudinal direction of the gutter profile 2. Furthermore, the support element 13 comprises a flexible material 14 at its side which contacts the rim 9.

In order to minimize the risk of water from above entering between the rim 9 of the insulated glass panel 6 and the first support 10 the gutter profile 2 is provided with a cover 15 in the form of an elongate strip which forms a sealing on the outer side 7 of the insulated glass panel 6. As a consequence, rain water flows from the outer side 7 over the cover 15 towards the gutter profile 2.

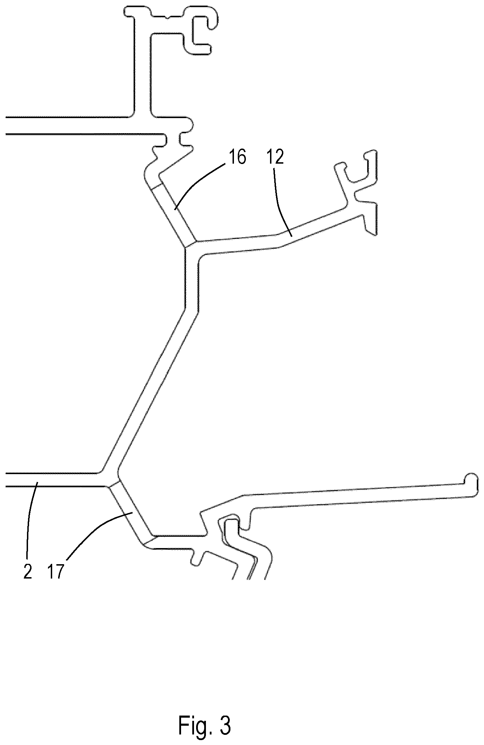

Fig. 3 shows a cross-section of a part of the gutter profile 2 at a certain location along the gutter profile 2 which is different from the location as shown in Fig. 2. At the location as shown in Fig. 3 there is no first support 10; the insulated glass panel 6 is not shown for clarity reasons. Fig. 3 shows an upper water discharge hole 16 for discharging water coming from the protrusion 12 to an upper cavity of the gutter profile 2 and a lower water discharge hole 17 for discharging water coming from the inner side 8 of the insulated glass panel 6 to a lower cavity of the gutter profile 2. The upper and lower cavities of the gutter profile 2 can transport the water in longitudinal direction of the gutter profile 2. The gutter profile 2 may be provided with a plurality of first and second discharge holes 16, 17 along the gutter profile 2.

The invention is not limited to the embodiment shown in the drawings and described hereinbefore, which may be varied in different manners within the scope of the claims and their technical equivalents. For example, an alternative embodiment of the glass supporting system may have a discrete opening between a lower side of the first support and the lateral protrusion of the gutter profile for discharging water through the opening rather than that the first support is entirely free from the protrusion.

## Claims

1. A glass supporting system for a greenhouse, comprising a horizontally oriented beam (2) and an insulated glass panel (6) which has an outer side (7), an opposite inner side (8) and a circumferential rim (9) extending between the outer side (7) and the inner side (8), wherein an edge portion of the insulated glass panel (6) is supported by a first support (10) of the beam (2) which contacts the rim (9) and a second support (11) of the beam (2) which contacts the inner side (8), wherein the second support (11) is located at a base (12) of the beam (2) that extends below the first support (10), wherein the insulated glass panel (6) is inclined upwardly in a direction away from the beam (2), **characterized in that** the glass supporting system comprises an opening between a lower side of the first support (10) and the base (12) for allowing water to flow in a direction away from the second support (12) and pass the lower side of the first support (10).

2. A glass supporting system according to claim 1, wherein the entire lower side of the first support (10) is free from the base (12).

3. A glass supporting system according to claim 1 or 2, wherein the second support (11) is located at a distance from the rim (9).

4. A glass supporting system according to any one of the preceding claims, wherein the beam comprises a gutter profile (2).

5. A glass supporting system according to any one of the preceding claims, wherein the base comprises a plate-shaped lateral protrusion (10) of the beam (2).

6. A glass supporting system according to claim 5, wherein the second support (11) is located at a free end of the protrusion (12).

7. A glass supporting system according to any one of the preceding claims, wherein the beam (2) comprises an extruded profile, preferably made of aluminium.

8. A glass supporting system according to any one of the preceding claims, wherein the first support (10) comprises a separate support element (13) which is mounted to the remainder of the beam (2).

9. A glass supporting system according to claim 8, wherein the support element (13) comprises an extruded profile, preferably made of aluminium.

10. A glass supporting system according to claim 8 or 9, wherein the length of the support element (13) is smaller than the length of the insulated glass panel (6) as measured in longitudinal direction of the beam (2).

11. A glass supporting system according to any one of the claims 8-10, wherein the support element (13) comprises a flexible material at a side which contacts the rim (9) and/or the second support (11) comprises a flexible material at a side which contacts the inner side (8).

12. A glass supporting system according to any one of the preceding claims, wherein the base (12) is inclined upwardly in a direction away from the beam (2).
